# EUROPEAN PATENT APPLICATION

(11) **EP 4 386 973 A1**
(43) Date of publication of application: **19.06.2024**
(21) Application number: 23207765.1
(22) Date of filing: 03.11.2023
(51) Int. Cl.: H01M 50/627, H01M 50/60, H01M 10/04, H01M 50/15, H01M 50/103

(54) **SECONDARY BATTERY**

(30) Priority: 18.11.2022 KR 20220155290
(71) Applicant: Samsung SDI Co., Ltd., Yongin-si, Gyeonggi-do 17084 (KR)
(72) Inventor: Park, Du Seon, 17084 Yongin-si, Gyeonggi-do (KR)
(74) Representative: Gulde & Partner

(57) **Abstract**

The present invention relates to a secondary battery (10) including an electrode assembly (100), a case (200) accommodating the electrode assembly (100) and an electrolyte, and a cap assembly (300) including a cap plate (310) coupled to one side of the case (200), defining an injection hole (314) therethrough, and including an injection hole tape (370a, 370b, 370c) attached to a lower portion of the injection hole (314).

## Description

### BACKGROUND

### 1. Field

The present invention provides a secondary battery having an improved injection structure.

### 2. Description of the Related Art

In general, a secondary battery may include electrode assemblies, which are stacked or wound and include a positive electrode plate and a negative electrode plate with a separator interposed therebetween, a case in which the electrode assembly and an electrolyte are accommodated, and a cap assembly for sealing the case. If a case has a rectangular parallelepiped shape, a cap assembly may include a rectangular plate-shaped cap plate coupled to the case, and a negative electrode terminal and a positive electrode terminal, which are provided on the cap plate. A vent for discharging gas and a vent hole for injecting an electrolyte may be formed in a cap plate.

In general, because a vent hole is in the form of a hole passing through a cap plate, the vent hole has a hole depth corresponding to a thickness of the cap plate. Because a diameter of an injection hole is small, a capillary phenomenon may occur during an injection process or if the injection process is completed. Thus, there may be a problem that a liquid film of an electrolyte is formed on an upper portion of an injection hole, and if a secondary battery is moved during a process, the electrolyte may flow backward and/or may be ejected from the injection hole.

The above information disclosed in this background section is only for enhancement of understanding of the background of the disclosure, and therefore may contain information that does not constitute the related art.

### SUMMARY

The present invention provides a secondary battery having an improved injection structure.

A secondary battery according to one or more embodiments of the present invention includes an electrode assembly, a case accommodating the electrode assembly and an electrolyte, and a cap assembly including a cap plate coupled to one side of the case, defining an injection hole therethrough, and including an injection hole tape attached to a lower portion of the injection hole.

The injection hole tape may define at least one cutting line.

The cutting line of the injection hole tape may be in the form of a cross or a straight line, or in the form of a plurality of cutting lines.

The injection hole tape may have a conical shape of which a diameter decreases toward the electrode assembly.

The injection hole tape may have a circular shape.

The injection hole tape may define a hollow portion therethrough.

The hollow portion may have a smaller size than the injection hole.

An edge region of the injection hole tape (e.g., a region adjacent to the injection hole) may have an adhesive property.

The injection hole may have a path shape (e.g., a cylindrical or conical path shape) with a height corresponding to a thickness of the cap plate.

The secondary battery may further include an insulating plate, wherein a through-hole may be formed in the insulating plate to correspond to a position of the injection hole.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF DRAWINGS

FIG. 1 is a perspective view illustrating a secondary battery according to one or more embodiments of the present invention.
FIG. 2 is a perspective view illustrating a cap assembly and an electrode assembly of FIG. 1.
FIG. 3 is a plan view illustrating a rear surface of the cap assembly of FIG. 1.
FIG. 4 is a partial perspective view showing a part of a cap assembly according to one or more embodiments of the present invention.
FIG. 5 is a partial perspective view illustrating a part of a cap assembly according to one or more other embodiments of the present invention.
FIG. 6 is a plan view illustrating a structure of an injection hole according to still one or more other embodiments of the present invention.

### DETAILED DESCRIPTION

Aspects of some embodiments of the present invention and methods of accomplishing the same may be understood more readily by reference to the detailed description of embodiments and the accompanying drawings. The described embodiments are provided as examples so that this disclosure will be thorough and complete, and will fully convey the aspects of the present invention to those skilled in the art. Accordingly, processes, elements, and techniques that are redundant, that are unrelated or irrelevant to the description of the embodiments, or that are not necessary to those having ordinary skill in the art for a complete understanding of the aspects of the present invention may be omitted. Unless otherwise noted, like reference numerals, characters, or combinations thereof denote like elements throughout the attached drawings and the written description, and thus, repeated descriptions thereof may be omitted.

The described embodiments may have various modifications and may be embodied in different forms, and should not be construed as being limited to only the illustrated embodiments herein. The present invention covers all modifications, equivalents, and replacements within the idea and technical scope of the present invention. Further, each of the features of the various embodiments of the present invention may be combined or combined with each other, in part or in whole, and technically various interlocking and driving are possible. Each embodiment may be implemented independently of each other or may be implemented together in an association.

In the drawings, the relative sizes of elements, layers, and regions may be exaggerated for clarity and/or descriptive purposes. Various embodiments are described herein, and variations from the shapes of the illustrations as a result of, for example, manufacturing techniques and/or tolerances, are to be expected. Further, specific structural or functional descriptions disclosed herein are merely illustrative for the purpose of describing embodiments according to the concept of the present invention. Thus, embodiments disclosed herein should not be construed as limited to the illustrated shapes of elements, layers, or regions, but are to include deviations in shapes that result from, for instance, manufacturing.

Spatially relative terms, such as "beneath," "below," "lower," "lower side," "under," "above," "upper," "upper side," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below," "beneath," "or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly. Similarly, when a first part is described as being arranged "on" a second part, this indicates that the first part is arranged at an upper side or a lower side of the second part without the limitation to the upper side thereof on the basis of the gravity direction.

Further, the phrase "in a plan view" means when an object portion is viewed from above. The terms "face" and "facing" may mean that a first object may directly or indirectly oppose a second object. In a case in which a third object intervenes between a first and second object, the first and second objects may be understood as being indirectly opposed to one another, although still facing each other.

It will be understood that when an element, layer, region, or component is referred to as being "formed on," "on," "connected to," or "(operatively or communicatively) coupled to" another element, layer, region, or component, it can be directly formed on, on, connected to, or coupled to the other element, layer, region, or component, or indirectly formed on, on, connected to, or coupled to the other element, layer, region, or component such that one or more intervening elements, layers, regions, or components may be present. In addition, this may collectively mean a direct or indirect coupling or connection and an integral or non-integral coupling or connection. For example, when a layer, region, or component is referred to as being "electrically connected" or "electrically coupled" to another layer, region, or component, it can be directly electrically connected or coupled to the other layer, region, and/or component or intervening layers, regions, or components may be present. However, "directly connected/directly coupled," or "directly on," refers to one component directly connecting or coupling another component, or being on another component, without an intermediate component. In addition, in the present specification, when a portion of a layer, a film, an area, a plate, or the like is formed on another portion, a forming direction is not limited to an upper direction but includes forming the portion on a side surface or in a lower direction. On the contrary, when a portion of a layer, a film, an area, a plate, or the like is formed "under" another portion, this includes not only a case where the portion is "directly beneath" another portion but also a case where there is further another portion between the portion and another portion. Meanwhile, other expressions describing relationships between components, such as "between," "immediately between" or "adjacent to" and "directly adjacent to" may be construed similarly. In addition, it will also be understood that when an element or layer is referred to as being "between" two elements or layers, it can be the only element or layer between the two elements or layers, or one or more intervening elements or layers may also be present.

For the purposes of this disclosure, expressions, such as "at least one of," or "any one of," or "one or more of" when preceding a list of elements, modify the entire list of elements and do not modify the individual elements of the list. For example, "at least one of X, Y, and Z," "at least one of X, Y, or Z," "at least one selected from the group consisting of X, Y, and Z," and "at least one selected from the group consisting of X, Y, or Z" may be construed as X only, Y only, Z only, any combination of two or more of X, Y, and Z, such as, for instance, XYZ, XYY, YZ, and ZZ, or any variation thereof. Similarly, the expression, such as "at least one of A and B" and "at least one of A or B" may include A, B, or A and B. As used herein, "or" generally means "and/or," and the term "and/or" includes any and all combinations of one or more of the associated listed items. For example, the expression, such as "A and/or B" may include A, B, or A and B. Similarly, expressions, such as "at least one of," "a plurality of," "one of," and other prepositional phrases, when preceding a list of elements, modify the entire list of elements and do not modify the individual elements of the list.

It will be understood that, although the terms "first," "second," "third," etc., may be used herein to describe various elements, components, regions, layers and/or sections, these elements, components, regions, layers and/or sections should not be limited by these terms. These terms do not correspond to a particular order, position, or superiority, and are used only used to distinguish one element, member, component, region, area, layer, section, or portion from another element, member, component, region, area, layer, section, or portion. Thus, a first element, component, region, layer or section described below could be termed a second element, component, region, layer or section, without departing from the scope of the present invention. The description of an element as a "first" element may not require or imply the presence of a second element or other elements. The terms "first," "second," etc. may also be used herein to differentiate different categories or sets of elements. For conciseness, the terms "first," "second," etc. may represent "first-category (or first-set)," "second-category (or second-set)," etc., respectively.

The terminology used herein is for the purpose of describing embodiments only and is not intended to be limiting of the present invention. As used herein, the singular forms "a" and "an" are intended to include the plural forms as well, while the plural forms are also intended to include the singular forms, unless the context clearly indicates otherwise. It will be further understood that the terms "comprises," "comprising," "have," "having," "includes," and "including," when used in this specification, specify the presence of the stated features, integers, steps, operations, elements, and/or components, but do not preclude the presence or addition of one or more other features, integers, steps, operations, elements, components, and/or groups thereof.

When one or more embodiments may be implemented differently, a specific process order may be performed differently from the described order. For example, two consecutively described processes may be performed substantially at the same time or performed in an order opposite to the described order.

As used herein, the term "substantially," "about," "approximately," and similar terms are used as terms of approximation and not as terms of degree, and are intended to account for the inherent deviations in measured or calculated values that would be recognized by those of ordinary skill in the art. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value. Further, the use of "may" when describing embodiments of the present invention refers to "one or more embodiments of the present invention."

Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

Hereinafter, a secondary battery according to one or more embodiments of the present invention will be described in detail with reference to the accompanying drawings.

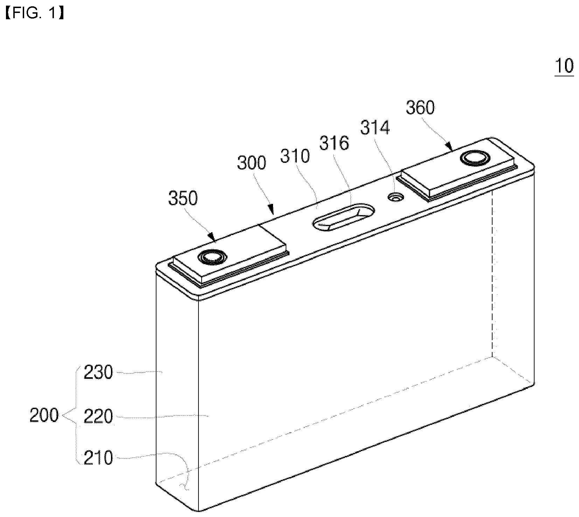

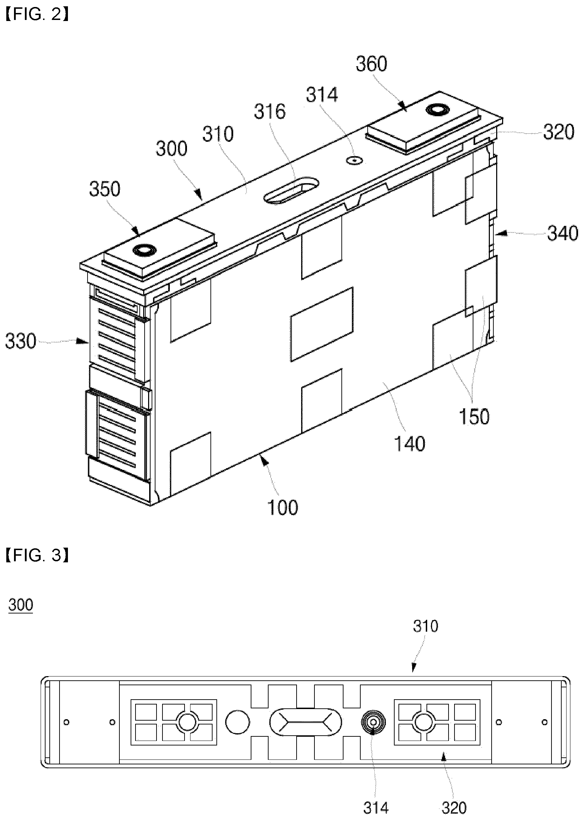

FIG. 1 is a perspective view illustrating an exemplary secondary battery. FIG. 2 is a perspective view illustrating a cap assembly and an electrode assembly of FIG. 1. FIG. 3 is a plan view illustrating a rear surface of the cap assembly of FIG. 1.

As shown in FIGS. 1 to 3, a secondary battery 10 according to one or more embodiments of the present invention may include an electrode assembly 100, a case 200 for accommodating the electrode assembly 100, and a cap assembly 300 coupled to the case 200. For example, the secondary battery 10 may be a prismatic battery in which the case 200 has a rectangular parallelepiped shape. This is merely an example, and the present invention can be applied to various types of secondary batteries.

As shown in FIG. 2, the electrode assembly 100 may be formed by winding or stacking a plurality of unit stacks that each include a first electrode plate 110 and a second electrode plate, which are in the form of a thin plate or film, with a separator 130 interposed therebetween. If the electrode assembly 100 is wound and formed, a winding shaft may be located in a horizontal direction approximately parallel to a length direction of the cap assembly 300, or in a vertical direction approximately perpendicular to the length direction of the cap assembly 300. If electrode assemblies 100 are stacked and formed, long side surfaces of the plurality of unit stacks may be located adjacent to a long side surface of the case 200. A sheet 140, which may be made of an insulating material for insulation from the case 200, may be attached to an outer portion of the electrode assembly 100 through an insulating tape 150. For example, the first electrode plate may be a negative electrode, and the second electrode plate may be a positive electrode. In one or more embodiments, the first electrode plate may be a positive electrode, and the second electrode plate may be a negative electrode.

If the first electrode plate is a negative electrode plate, the first electrode plate may be formed by applying a first electrode active material, such as graphite or carbon, on a first electrode current collector provided as a metal foil made of copper, a copper alloy, nickel, or a nickel alloy. A first uncoated portion, which is a region on which the first electrode active material is not applied, may be formed on the first electrode plate. Because the first uncoated portion serves as a tab that is electrically connected to a first collector plate 330 to be described below, the first uncoated portion may be defined as a first substrate tab. A plurality of first substrate tabs may be bent to one side, and may be welded to the first collector plate 330. The first collector plate 330 may be electrically connected to the cap assembly 300.

If the second electrode plate is a positive electrode plate, the second electrode plate may be formed by applying a second active material, such as a transition metal oxide, on a second electrode current collector provided as a metal foil made of copper, a copper alloy, nickel, or a nickel alloy. A second uncoated portion, which is a region on which the second electrode active material is not applied, may be formed on the second electrode plate. Because the second uncoated portion serves as a tab electrically connected to a second collector plate 340 to be described below, the second uncoated portion may be defined as a second substrate tab. A plurality of second substrate tabs may be bent to one side, and may be welded to the second collector plate 340. The second collector plate 340 may be electrically connected to the cap assembly 300.

The separator is located between the first electrode plate and the second electrode plate to reduce or prevent the likelihood of a short circuit, and to enable movement of lithium ions. For example, the separator may include polyethylene, polypropylene, or a composite film of polyethylene and polypropylene. The present invention is not limited to the above materials.

The electrode assembly 100 having such a structure and an electrolyte may be accommodated in the case 200. In some examples, the electrolyte may include a lithium salt, such as LiPF₆ or LiBF₄ in an organic solvent, such as ethylene carbonate (EC), propylene carbonate (PC), diethyl carbonate (DEC), ethylmethyl carbonate (EMC), or dimethyl carbonate (DMC). In one or more embodiments, the electrolyte may be in a liquid or gel state. In some examples, if an inorganic-based solid electrolyte is used, the electrolyte may be omitted.

As shown in FIG. 1, the case 200 may have an approximately rectangular parallelepiped box shape, an upper portion thereof in a length direction may be open, and an accommodation space may be formed therein. The electrode assembly 100 and the electrolyte may be accommodated inside the case 200 through the open upper portion. Some components of the cap assembly 300 may be exposed to the outside of the case 200, and some components thereof may be accommodated inside the case 200. The case 200 may have a bottom surface 210 having a rectangular shape, and may have four side surfaces connected to the bottom surface 210. Among the side surfaces, a surface having a relatively large area is defined as a long side portion 220, and a surface having a relatively small area is defined as a short side portion 230. For example, the electrode assembly 100 may be located such that a plate surface thereof faces the long side portion 220. A short side portion is not formed at a position of an upper portion of the case 200, and the cap assembly 300 is coupled to the upper portion.

As shown in FIGS. 1 to 3, the cap assembly 300 may include a cap plate 310 coupled to the case 200, a plurality of insulating members, the first collector plate 330, the second collector plate 340, a first terminal 350, and a second terminal 360 (components not related to the gist of the present invention will be briefly described or omitted).

The cap plate 310 may have an approximately rectangular plate shape, and may be made of the same material as the case 200. Terminal holes for respectively coupling with the first terminal 350 and the second terminal 360, an injection hole 314, and a vent hole for coupling with a vent 316 may be formed in the cap plate 310. To insulate the cap plate 310 from the electrode assembly 100, in one or more embodiments, a plurality of insulating members, such as an insulating plate 320, may be provided. The first terminal 350 and the second terminal 360 are coupled onto the cap plate 310 to be spaced apart from the injection hole 314 and the vent 316. The first terminal 350 and the second terminal 360 may be electrically connected to the electrode assembly 100.

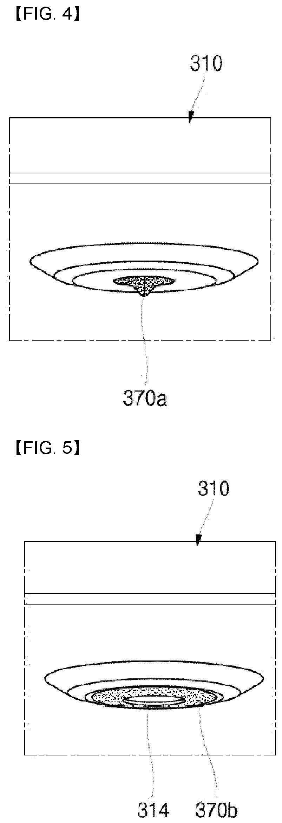

In one or more embodiments, as shown in FIGS. 1 and 3, the injection hole 314 is formed to pass through the cap plate 310. A through-hole is also formed in the insulating plate 320 to correspond to a position of the injection hole 314. Therefore, the electrolyte may be injected into the case 200 through the injection hole 314. The injection hole 314 is a relatively very small and narrow hole, as compared with the overall size of the secondary battery 10. In one or more embodiments, if the injection hole 314 is enlarged, the injection hole 314 has a cylindrical path shape with a height corresponding to a thickness of the cap plate 310. Therefore, if the electrolyte is injected through the injection hole 314 and welled up in the injection hole 314, the electrolyte may form a liquid film without being discharged due to a capillary phenomenon. In this case, if the secondary battery 10 is moved, the electrolyte welled up in the injection hole 314 may be ejected from the injection hole 314. Therefore, in the present invention, a separate injection hole tape 370a, 370b, or 370c, as respectively shown in FIGS. 4, 5, and 6, is provided at a lower portion of the injection hole 314 to reduce or prevent the likelihood of the electrolyte forming a liquid film.

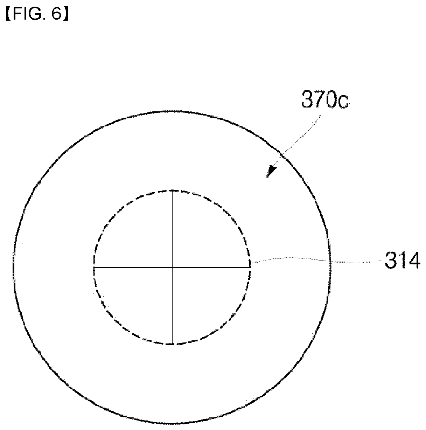

FIG. 4 is a partial perspective view illustrating a part of a cap assembly according to one or more embodiments of the present invention. FIG. 5 is a partial perspective view illustrating a part of a cap assembly according to one or more other embodiments of the present invention. FIG. 6 is a plan view illustrating a structure of an injection hole according to still one or more other embodiments of the present invention (components not shown in FIGS. 4 to 6 will be described with reference to FIGS. 1 to 3).

As shown in FIG. 4, an injection hole tape 370a according to one or more embodiments of the present invention may be attached to a lower portion of an injection hole 314 (e.g., in a downward direction in FIG. 1 or 2). For the injection hole tape 370a, any material may be used irrespective of whether the material is an insulating material or a non-insulating material, as long as the material does not react with an electrolyte. The injection hole tape 370a may have a conical shape of which a diameter gradually decreases toward a lower portion thereof, and a cutting line may be formed at a central portion thereof. In one or more embodiments, the cutting line may be in the form of a straight line or a cross. In one or more embodiments, the injection hole tape 370a having the conical shape is formed to be opened or closed if cut along the cutting line. Therefore, if an injection tool in the form of a needle is inserted into the injection hole 314, the injection tool can be inserted while the cutting line is widened. If the injection tool is removed after injection, a widened portion of the cutting line can be restored to its original state. To this end, the injection hole tape 370a may be formed such that only a portion thereof attached to the injection hole 314 has an adhesive property, and a portion of the cutting line has no adhesive property. For example, an adhesive region may be an edge region of the injection hole tape 370a. This may reduce or prevent the likelihood of the injection hole tape 370a being attached to the injection tool if the injection tool is inserted.

In one or more embodiments, as shown in FIG. 5, an injection hole tape 370b may have a ring shape with a hollow portion formed in a central portion thereof. The hollow portion of the injection hole tape 370b is formed to have a smaller size than an injection hole 314. Although the hollow portion is formed in the injection hole tape 370b, because the hollow portion has a smaller size than the injection hole 314, even if a liquid film of an electrolyte is formed, the liquid film is formed on the hollow portion of the injection hole tape 370b rather than the inside of the injection hole 314. Therefore, if a secondary battery 10 is moved, the electrolyte is not ejected from the injection hole 314. In one or more embodiments, the injection hole tape 370b may be formed such that only a portion thereof, which is attached to the injection hole 314, has an adhesive property, while a periphery of the hollow portion has no adhesive property. For example, an adhesive region may be an edge region of the injection hole tape 370b. Similar to the one or more embodiments corresponding to FIG. 4, the above features may reduce or prevent the likelihood of the injection hole tape 370b being attached to an injection tool if the injection tool is inserted. For the injection hole tape 370b, any material may be used irrespective of whether the material is an insulating material or a non-insulating material as long as the material does not react with an electrolyte.

In one or more embodiments, as shown in FIG. 6, an injection hole tape 370c may have a circular shape with a cutting line formed at or near a central portion thereof. The cutting line of the injection hole tape 370c may be in the form of a cross, or may be in the form of a straight line, or in the form of a plurality of cutting lines. If an injection tool is inserted, the cutting line of the injection hole tape 370c may be widened, and if the injection tool is removed, the cutting line may be restored to its original state. To this end, the injection hole tape 370c may be formed such that only a portion thereof attached to the injection hole 314 has an adhesive property, and such that the cutting line has no adhesive property. For example, an adhesive region may be an edge region of the injection hole tape 370c. Similar to the one or more embodiments corresponding to FIG. 4, the above features may reduce or prevent the likelihood of the injection hole tape 370c being attached to the injection tool if the injection tool is inserted. For the injection hole tape 370c, any material may be used irrespective of whether the material is an insulating material or a non-insulating material as long as the material does not react with an electrolyte.

As described above, an injection hole tape is provided to reduce or prevent the likelihood of a capillary phenomenon in an injection hole, thereby reducing or preventing the likelihood of a liquid film of an electrolyte forming on the injection hole. For example, it is possible to reduce or prevent the reverse flow of an electrolyte, and to reduce or prevent the likelihood of the electrolyte being ejected if a secondary battery is moved during a process.

According to embodiments of the present invention, a structure of a lower portion of an injection hole is improved to reduce or prevent the likelihood of a capillary phenomenon, thereby reducing or preventing the likelihood of a liquid film of an electrolyte forming on the injection hole. For example, the reverse flow of the electrolyte can be reduced or prevented if a secondary battery is moved during a process.

While the foregoing embodiments are only embodiments for carrying out the present invention, which is not limited to the embodiments, it will be understood by a person skilled in the art that various changes in form and details may be made therein without departing from the scope of the present invention as defined by the following claims, with functional equivalents thereof to be included therein.

## Claims

1. A secondary battery (10) comprising:
an electrode assembly (100);
a case (200) accommodating the electrode assembly (100) and an electrolyte; and
a cap assembly (300) comprising a cap plate (310) coupled to one side of the case (200), defining an injection hole (314) therethrough, and comprising an injection hole tape (370a, 370b, 370c) attached to a lower portion of the injection hole (314).

2. The secondary battery (10) as claimed in claim 1, wherein an edge region of the injection hole tape (370a, 370b, 370c) has an adhesive property.

3. The secondary battery (10) as claimed in claim 1, wherein the injection hole tape (370a, 370b, 370c) defines at least one cutting line.

4. The secondary battery (10) as claimed in claim 3, wherein an edge region of the injection hole tape (370a, 370b, 370c) has an adhesive property.

5. The secondary battery (10) as claimed in claim 3 or 4, wherein the cutting line of the injection hole tape (370a, 370b, 370c) is in the form of a cross or a straight line, or in the form of a plurality of cutting lines.

6. The secondary battery (10) as claimed in claim 3, wherein the injection hole tape (370a, 370b, 370c) has a conical shape of which a diameter decreases toward the electrode assembly (100).

7. The secondary battery (100) as claimed in claim 6, wherein an edge region of the injection hole tape has an adhesive property.

8. The secondary battery (10) as claimed in claim 3, wherein the injection hole tape (370a, 370b, 370c) has a circular shape.

9. The secondary battery (10) as claimed in claim 8, wherein an edge region of the injection hole tape (370a, 370b, 370c) has an adhesive property.

10. The secondary battery (10) as claimed in claim 1, wherein the injection hole tape (370a, 370b, 370c) defines a hollow portion therethrough.

11. The secondary battery (10) as claimed in claim 10, wherein an edge region of the injection hole tape (370a, 370b, 370c) has an adhesive property.

12. The secondary battery (10) as claimed in claim 10, wherein the hollow portion has a smaller size than the injection hole (314).

13. The secondary battery (10) as claimed in claim 12, wherein an edge region of the injection hole tape (370a, 370b, 370c) has an adhesive property.

14. The secondary battery (10) as claimed in any one of the preceding claims, wherein the injection hole (314) has a path shape with a height corresponding to a thickness of the cap plate (310).

15. The secondary battery (10) as claimed in any one of the preceding claims, further comprising an insulating plate (320), wherein a through-hole is formed in the insulating plate (320) to correspond to a position of the injection hole (314).
